(19) Europäisches Patentamt
European Patent Office
Office européen des brevets

(11) **EP 3 359 975 B1**

(12) **EUROPÄISCHE PATENTSCHRIFT**

(45) Veröffentlichungstag und Bekanntmachung des Hinweises auf die Patenterteilung:
**21.08.2019 Patentblatt 2019/34**

(21) Anmeldenummer: **15816357.6**

(22) Anmeldetag: **09.10.2015**

(51) Int Cl.:
*G01S 7/521* (2006.01)      *G01S 15/87* (2006.01)
*G01S 7/52* (2006.01)      *E01C 19/00* (2006.01)
*E02F 9/20* (2006.01)

(86) Internationale Anmeldenummer:
**PCT/DE2015/100420**

(87) Internationale Veröffentlichungsnummer:
**WO 2017/059837 (13.04.2017 Gazette 2017/15)**

(54) **SENSOR MIT MONOLITHISCHEN ULTRASCHALLARRAY**

SENSOR WITH MONOLITHIC ULTRASONIC ARRAY

CAPTEUR COMPRENANT UN ENSEMBLE ULTRASONIQUE MONOLITHIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.08.2018 Patentblatt 2018/33**

(73) Patentinhaber: **microsonic GmbH**
**44263 Dortmund (DE)**

(72) Erfinder: **SCHULTE, Johannes**
**44263 Dortmund (DE)**

(74) Vertreter: **Wickord, Wiro**
**Tarvenkorn & Wickord Patentanwälte**
**Partnerschaftsgesellschaft mbB**
**Technologiepark 11**
**33100 Paderborn (DE)**

(56) Entgegenhaltungen:
EP-A1- 0 312 845      CN-A- 1 776 124
DE-A1- 4 204 481      DE-A1- 4 206 990
DE-A1- 4 218 041      DE-A1-102014 216 681
DE-U1- 8 810 670      US-A- 4 470 299
US-A1- 2006 133 209

**Beschreibung**

Die Erfindung bezieht sich auf einen Sensor zur Erfassung seiner relativen Lage zu einer Führungsfläche mit einem Gehäuse, an dessen Bodenseite sich ein ebenes, länglich ausgebildetes Ultraschallwandler-Array befindet, welches aus mehreren Mess-Ultraschallwandlern besteht, und einer elektronischen Auswerteeinrichtung, die abhängig von Messsignalen der Mess-Ultraschallwandler Messwerte zur Lage der Führungsfläche abgibt.

Zur Führung von Landmaschinen oder Baumaschinen, insbesondere für sogenannte Straßenfertiger, werden Führungsdrähte eingesetzt, welche die Maschine auf einer vorbestimmten Route fahren lassen. Der Führungsdraht wird parallel zur Route in einer genau definierten Höhe gespannt. Über den Sensor wird die relative Lage der Maschine zum Führungsdraht erfasst und an die Steuerung der Maschine weitergegeben, so dass die Steuerung die Maschine so nachführt, das diese in konstanten Abständen dem Führungsdraht folgt.

Um die heutigen Anforderungen an die Genauigkeit der Steuerung der Maschine, insbesondere der Höhensteuerung im Straßenbau, zu erfüllen, müssen hochauflösende Sensoren eingesetzt werden. Dazu kommen vorzugsweise Ultraschallsensoren in Betracht, die in der Lage sind, eine genaue Lageinformation in Bezug auf den Führungsdraht oder einer sonstigen Führungsfläche zu erzeugen.

Mit Ultraschallsensor oder Sensor wird hier die gesamte Sensoreinheit, bestehend aus Ultraschallwandlern, Elektronik und Sensorgehäuse bezeichnet, mit Ultraschallwandler das physikalische Sensorelement, welches elektrische Energie in Schall und umgekehrt Schall in elektrische Energie wandelt.

Ultraschallwandler für die Anwendung in Luft bestehen heute typisch aus einer runden Anpassschicht und einer runden Piezoscheibe, z.B. aus dem Material PZT. Die Piezoscheibe wird von hinten auf die Anpassschicht geklebt. Feine Litzen, die an der Piezoscheibe angelötet sind, stellen den elektrischen Anschluss her. Die Anpassschicht hat die Aufgabe, den akustischen Wellenwiderstand des Piezomaterials an den Wellenwiderstand der Luft anzupassen. Akustische Anpassschichten können z.B. aus Glashohlkugeln, die in ein Epoxidharz eingerührt werden, hergestellt werden. Die Dicke der Anpassschicht beträgt Lambda/4 der gewünschten Ultraschallfrequenz. Derartige Ultraschallwandler bilden ein rotationssymetrisches Schallfeld aus. Benötigt man in einer Richtung ein breiteres Schallfeld, werden mehrere dieser Ultraschallwandler beabstandet eng nebeneinander angeordnet und bilden damit ein Ultraschallarray. Die sich ausbildenden Ultraschallkeulen überlappen sich dabei deutlich.

Von der Fa. MOBA Mobile Automation AG ist der Sensor "SONIC SKI plus" bekannt, bei dem vier einzelne kreisrunde Ultraschallwandler beabstandet in einer Reihe angeordnet in einem Gehäuse eingebaut sind. Eine Beschreibung des Sensors findet sich auch in der CN 1776124 A. Die vier Ultraschallwandler sitzen versenkt in Vertiefungen am Boden des Gehäuses. Eine zusätzliche Referenzmessstrecke zur Kompensation der Temperaturabhängigkeit der Schallgeschwindigkeit und etwaigen anderen Umwelteinflüssen auf die Schallgeschwindgkeit wird über einen weiteren Ultraschallwandler in einem rechtwinklig vom Gehäuse abstehenden Arm und einem dem gegenüberliegenden zweiten Arm mit Reflektorfläche gebildet. In dem Gehäuse befindet sich eine zentrale Auswerteelektronik, die die vier Ultraschallwandler und den Ultraschallwandler in der Referenzstrecke nach der Echo-Laufzeitmessung ansteuert und auswertet. Da sich die vier Ultraschallwandler nicht auf einer gemeinsamen Anpassschicht befinden, bilden sie kein monolithisches Ultraschallarray.

Dieser Sensor ist nur zur Höhenmessung vorgesehen.

Der Sensor ist mit seinen links und rechts rechtwinklig abstehenden Armen in den Abmessungen recht groß und unhandlich und im täglichen Betrieb eines Straßenbauunternehmens wartungsintensiv. Die im Sensorgehäuse einzeln vertieft eingebauten Ultraschallwandler verschmutzen schnell und verfälschen dann das Messergebnis. Die Reinigung der Vertiefungen ist relativ aufwändig. Der Einbau einzelner Ultraschallwandler und das aufwändige Gehäuse mit seinen beiden abstehenden Armen verteuern den Sensor in seinen Herstellkosten.

Aus der US 2006/133209 A1 ist bekannt, eine Referenzmessstrecke mit einem Ultraschallwandler und unter Verwendung von zwei um 45° geneigten Reflektorflächen zu bilden.

In der deutschen Patentschrift DE 38 16 198 C1 ist ein Steuersensor beschrieben, bei dem mittels vier Ultraschallsensoren die Lageinformation ermittelt wird. Die Ultraschallsensoren sind an dem Boden des Gehäuses einzeln angeordnet und in einem Kunststoffblock eingegossen. Zur Ausführung der notwendigen akustischen Anpassschicht sind keine Angaben gemacht. Zur Temperaturkompensation der Messungen ist nur ein einfacher Temperatursensor vorgesehen.

In der deutschen Patentanmeldung DE 42 06 990 A1 ist ein Verfahren zur Erfassung der seitlichen Lage einer Baumaschine mit einem Sensor aus zwei Ultraschallwandlern beschrieben. Die Referenzmessung erfolgt über dieselben Wandler anhand eines Echos, das an zwei Kanten reflektiert wird.

Ebenfalls zeigen die DE 42 04 481 A1 und die US 4,470,299 A Lösungen, bei denen auf einen gesonderten Ultraschallwandler für die Referenzmessstrecke verzichtet wird.

Es ist die Aufgabe der Erfindung, einen Sensor zur Erfassung seiner relativen Lage zu einer Führungsfläche zu offenbaren, der in der Lage ist, horizontale und vertikale Messergebnisse mit hoher Genauigkeit zu liefern, gleichzeit wartungsfreundlich ausgeführt und kostengünstig herzustellen ist.

Diese Aufgabe wird durch einen Sensor mit den Merkmalen des Anspruchs 1 und die Verfahrensansprüche 14 und 15 gelöst.

Vorteilhafte Ausgestaltungen der Erfindung sind in den abhängigen Ansprüchen angegeben.

Die Schallgeschwindgkeit ist stark temperaturabhängig. Mit einer Referenzmessstrecke mit bekannter Länge kann der Einfluss der Temperatur über eine einfache Verhätnisrechung kompensiert werden. Ein weiterer Vorteil einer Referenzmessstrecke besteht darin, dass auch andere Umweltfaktoren auf die Schallgeschwindgkeit und somit auf die Genauigkeit der Echo-Laufzeitmessung ebenfalls kompensiert werden.

Der Sensor zur Erfassung seiner relativen Lage zu einer Führungsfläche besitzt ein Gehäuse, an dessen Bodenseite sich ein ebenes, länglich ausgebildetes Ultraschallwandler-Array befindet, welches aus mehreren Mess-Ultraschallwandlern besteht, und einer elektronischen Auswerteeinrichtung, die abhängig von Messsignalen der Mess-Ultraschallwandler Messwerte zur Lage der Führungsfläche abgibt.

In dem erfindungsgemäßen Sensor wird dadurch eine Referenzmessstrecke realisiert, dass an den beiden äußeren Enden des Ultraschallwandler-Arrays zusätzlich je ein Referenz-Ultraschallwandler angebracht ist und beabstandet zur Bodenseite und in Flucht zu den Referenz-Ultraschallwandlern je eine Reflektorfläche angebracht, die jeweils um 45° zur Bodenseite geneigt sind und dabei zueinander zeigen. Es bildet sich somit eine Referenzmessstrecke mit einer bekannten Länge zwischen den beiden Referenz- Ultraschallwandlern aus.

Die 45° geneigten Reflektorflächen sind als feste Bügel über der Bodenseite ausgebildet und sind bevorzugt direkt Bestandteil des Gehäuses. Das erspart die zusätzliche Montage von mechanischen Armen oder Auslegern.

In dieser Anmeldung wird von einer Führungsfläche gesprochen, zu der die relative Lage des Sensors bestimmt wird. Dies kann die Oberfläche eines Führungsdrahtes sein. Es kann aber ebenso gut eine Führungslatte oder ähnliches zum Einsatz kommen, bei der die obere Kante den Bezugswert für die Lageeinstellung bildet. Es ist aber auch vorgesehen, dass der Sensor direkt den Abstand zum darunter befindlichen Boden misst.

Erfindungsgemäß werden die beiden Referenz-Ultraschallwandler und die Mess-Ultraschallwandler nicht diskret, sondern mit einer einzigen, länglich ausgebildeten akustischen Anpassschicht aufgebaut, auf dessen Rückseite mehrere zueinander beabstandete Mess-Piezoscheiben und an den beiden äußeren Enden dieser Anordnung zusätzlich je eine Referenz-Piezoscheiben aufgebracht sind. Die Rückseite dieser Anpassschicht mit den Piezoscheiben ist von einem Schaumstoff umschlossen. Die gegenüberliegende vordere glatte Seite der Anpassschicht schließt bündig mit der Bodenseite des Sensors ab und ist die schallabstrahlende Seite des Ultraschallwandler-Arrays. Das Ultraschallwandler-Array ist somit als eine monolithische Einheit ausgebildet.

Die Referenzmessstrecke kann mit diskreten Referenz-Ultraschallwandlern aufgebaut werden, bei denen die Referenz-Piezoscheiben mit einer zugehörigen, separaten Anpassschicht versehen sind. In einer bevorzugten Ausführungsvariante werden die Referenz- und Mess-Ultraschallwandler in das monolithische Utraschallwandler-Array zu einer Einheit integriert.

Über die Mess-Ultraschallwandler werden Schallimpulse ausgesendet und Echosignale empfangen. Eine Auswerteeinrichtung gibt, abhängig von den Messsignalen, Messwerte zur Lage der Führungsfläche ab.

Bei diesem Sensor ist das monolithische Ultraschallwandler-Array mit seiner durchgängig glatten akustischen Anpassschicht bündig in den Boden des Sensors eingebaut.

Durch diese bündige Anordnung der schallabstrahlenden Seite der Anpassschicht und dem Boden des Sensorgehäuses ergibt sich eine große glatte Fläche, die leicht zu reinigen ist.

Die Anpassschicht des Ultraschallwandler-Array, die die Dicke Lambda/4 der gewünschten Ultraschallfrequenz aufweist, ist länglich ausgebildet. Auf ihrer Rückseite sind mindestens zwei, in einer Ausführungsvariante fünf runde Mess-Piezoscheiben beabstandet in einer Reihe auf der Anpassschicht plaziert. Deren Befestigung kann beispielsweise durch Löten, Kleben oder Klemmen erfolgen.

Versuche haben gezeigt, dass mit rechteckigen Piezoscheiben etwas asymmetrische Ultraschallkeulen erzeugt werden können, welche in einer Richtung breiter ausfallen. Werden rechteckige Piezoscheiben mit den breiten Seiten der Ultraschallkeulen beabstandet nebeneinander auf der Rückseite der Anpassschicht angeordnet, kann die Anzahl der notwendigen Piezoscheiben gegenüber der Ausführung mit runden Piezoscheiben reduziert werden, da die rechteckigen Piezoscheiben dann etwas weiter auseinander angeordnet sind.

Zwischen den Piezoscheiben sind auf der Rückseite der Anpassschicht Nuten eingebracht, die für eine akustisch-mechanische Entkopplung zwischen den einzelnen Piezoscheiben sorgen. Für eine gute elektromagnetische Schirmung wird die Rückseite der Anpassschicht zunächst metallisiert und die Piezoscheiben dann auf dieser Metallisierung plaziert. Die Anordnung ist in einem weichen Material aus Polyurethan- oder Silikonschaum zur mechanischen Entkopplung vom Sensorgehäuse eingebettet.

In einer weiteren Ausführungsform ist die Anpassschicht des Ultraschallwandler-Arrays auf der Rückseite zusätzlich mit einem umlaufenden Rand versehen, so dass die ebene Anpassschicht mit dem umlaufenden Rand jetzt eine Wanne bildet. Die Wanne ist von innen zur elektromagnetischen Abschirmung metallisiert. Auf den metallisierten Wannenboden sind die Piezoscheiben platziert und mit dünnen Litzen elektrisch kontaktiert.

Das Verfahren zur Ermittlung von Umweltfaktoren an der Bodenseite des vorbeschriebenen Sensors nutzt die Referenzmessstrecke dadurch, dass einer der Referenz-Ultraschallwandler einen kurzen Schallimpuls mit einer ersten Schallfrequenz aussendet, der über die beiden Reflektorflächen umgelenkt und über die Referenzmessstrecke zu der anderen Referenz-Piezoscheibe gelangt und dort empfangen wird. Die Auswerteeinrichtung misst eine erste Zeit zwischen dem Aussenden des Schallimpulses und dem Empfang. Anschließend wird die gleiche Messung in entgegengesetzter Richtung wiederholt und die Auswerteeinrichtung misst dabei eine zweite Zeit. Aus der ersten und zweiten gemessenen Zeit wird der arithmetische Mittelwert gebildet und dieser Referenzlaufzeitwert Zr dient als Maß für die aktuellen Werte der Umweltfaktoren an der Bodenseite des Sensors. Mit dieser Zweifachmessung in entgegensetzter Richtung wird der Einfluss von Wind auf die Referenzmessung eliminiert.

Das Verfahren zur Erfassung einer relativen Lage des vorbeschriebenen Sensors zu einer Führungsfläche sieht wie folgt aus:

Erst wird die oben beschriebene Referenzmessung durchgeführt. Anschließend sendet der Sensor über die Mess-Piezoscheiben nacheinander Schallimpulse mit einer zweiten Schallfrequenz aus, wobei der Sendeimpuls immer nur auf eine Mess-Piezoscheibe gegeben wird. Anschließend empfängt der Sensor an allen Mess-Piezoscheiben Echosignale.

Die so ermittelten Laufzeitwerte werden mit dem Referenzwert über eine einfache Verhältnisrechnung kompensiert:

Entfernung L zum Draht in mm:

$$L = Lr * Z/Zr / 2$$

mit Z = Laufzeitwert in $\mu$s, Zr = Referenzlaufzeitwert in $\mu$s, Lr = Referenzlänge in mm.

Die Referenz-Messstrecke kann mit gleicher Ultraschallfrequenz wie die Mess-Piezoscheiben arbeiten. In einer bevorzugten Ausführung wird für die Referenz-Messstrecke eine höheren Ultraschallfrequenz gewählt.

Wahlweise können die so ermittelten Entfernungswerte mit jeder durchgeführten Messung an die an den Sensor angeschlossene Steuerung übergeben werden, oder aber zunächst über trigonometrische Berechnungen die exakte Position des Drahtes unter dem Sensor ermittelt und nur die X- und Y-Position des Drahtes relativ zum Sensor an die Steuerung übergeben werden.

Die Ausgabe der Messwerte erfolgt über einen elektrischen Anschluss an dem Sensor.

Soll nur der Abstand zwischen Sensor und Draht ausgegeben werden, kann dies über ein standardisiertes Analogsignal wie 0-10 V oder 4-20 mA erfolgen.

An Baumaschinen ist der CAN-Bus sehr verbreitet. In einem Protokoll können über den CAN-Bus die Messwerte von den einzelnen Piezoscheiben, oder aber die zuvor im Sensor ermittelte X- und Y-Position des Drahtes relativ zum Sensor übertragen werden.

An dem Gehäuse des Sensors sind vorteilhaft Indikatoren angebracht, die anzeigen, ob sich die Führungsfläche in einem vorgegebenen horizontalen und/oder vertikalen Lagebereich des Sensors befindet. Diese Indikatoren geben dem Bediener der Maschine die Möglichkeit, diese auf ihrer Route auch per Hand zu steuern.

Die berechnete Lageinformation der Führungsfläche im Messbereich des Sensors wird vorteilhaft auch auf den Indikatoren am Gehäuse dargestellt. So kann auch ein Bediener der Maschine diese auf der richtigen Route per Hand steuern, indem er die Indikatoren beobachtet. Diese können für beide Lageinformationen jeweils als numerische Anzeige oder als eine +/- Anzeige gestaltet sein.

Ausführungsformen der Erfindung werden anhand der Figuren weiter erläutert.

Es zeigen:

Fig. 1 einen Querschnitt durch den Sensor mit Messbereich;
Fig. 2 eine Schrägansicht des Sensors von unten;
Fig. 3 eine Unteransicht des Sensors;
Fig. 4 eine Seitenansicht des Sensors mit Anschlusssockel;
Fig. 5 eine Draufsicht und einen Schnitt durch das monolithische Utraschallwandler-Array;
Fig. 6 eine Draufsicht auf das monolithische Utraschallwandler-Array mit umlaufendem Rand.

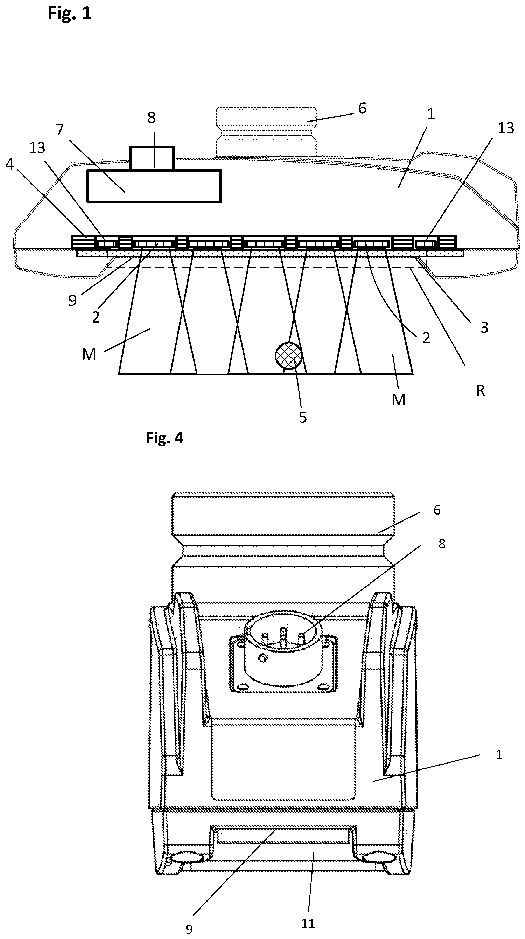

In Fig. 1 ist ein Querschnitt durch einen Sensor mit seinen sich ausbildenden Ultraschallkeulen M und dem Führungsdraht 5 dargestellt. Das Gehäuse 1 ist über den Befestigungszapfen 6 an einer definierten Position mit der Maschine verbunden. In der Bodenseite 9 des Gehäuses 1 ist das monolithische Ultraschallwandler-Array, bestehend aus der Anpassschicht 3, der Wanne 4, den Mess-Piezoscheiben 2 und den Referenz-Piezoscheiben 13, bündig eingelassen. Die Piezoscheiben 2 bilden die Ultraschallkeulen M aus, die den Führungsdraht 5 erfassen. Von dort reflektierte Echos werden von den Mess-Piezoscheiben 2 wieder empfangen und in der Auswerteeinrichtung 7 ausgewertet. Die in der Auswerteeinrichtung gemessenen Werte werden über den Anschlusssockel 8 an die Maschine weitergeleitet.

Die zwei an den beiden Enden der Anpassschicht 3 positionierten Referenz-Piezoscheiben 13 bilden die Referenzmessstrecke R aus, die zur Berechnung des Temperatureinflusses der Luft dient.

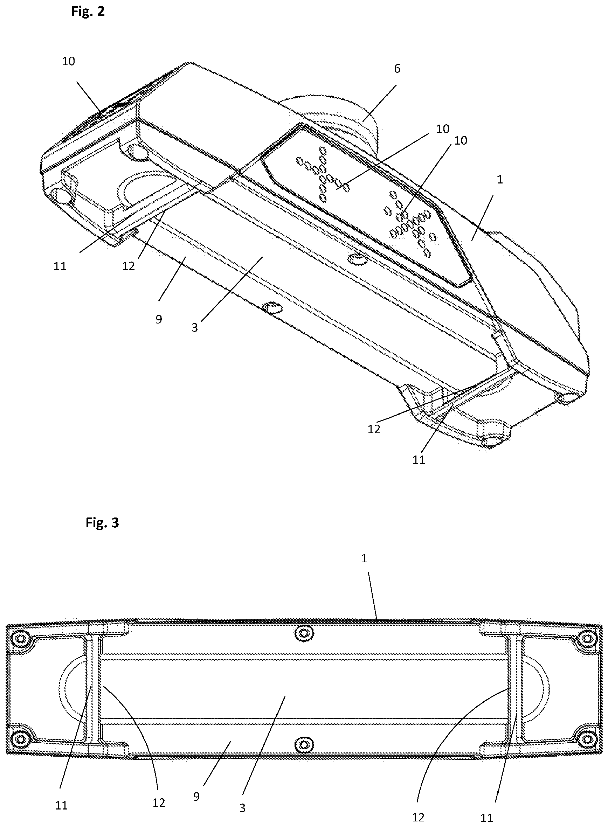

Unteransichten des Sensors sind in Fig. 2 und Fig. 3 dargestellt. In die Bodenseite 9 des Gehäuses ist das monolithische Ultraschallwandler-Array mit seiner Anpassschicht 3 bündig eingelassen. Über den Enden der Anpassschicht 3 ist jeweils ein Reflektorbügel 11 positioniert, deren um 45° gedrehte Reflektorflächen 12 die Referenzmessstrecke über der Anpassschicht 3 ausbilden.

An dem Gehäuse 1 des Sensors ist der Befestigungszapfen 6 angebracht, der den Sensor in einer definierten Position hält. An den Seiten des Gehäuses 1 sind Indikatoren 10 vorhanden, die optische Auskunft über die Lage des Führungsdrahtes im Messbereich des Sensors vermitteln.

Fig. 4 zeigt eine Seitenansicht des Sensors mit dem am Gehäuse 1 angebrachten Befestigungszapfen 6 und dem Anschlusssockel 8 für die Ausgabe der Messwerte.

Über der Bodenseite 9 ist ein Reflektorbügel 11 zu erkennen.

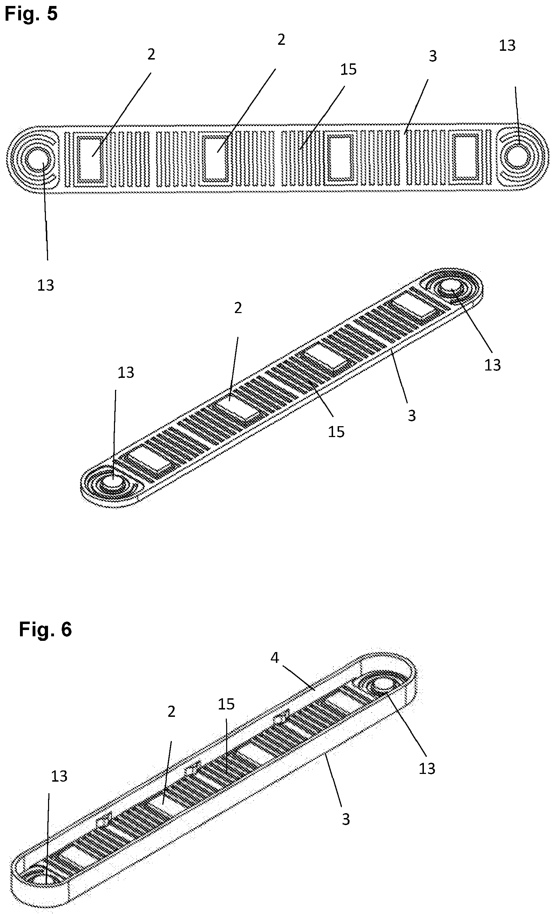

Fig. 5 zeigt in Draufsicht und Schrägansicht das monolithische Ultraschallwandler-Array mit der Anpassschicht 3, vier rechteckförmigen Mess-Piezoscheiben 2 für die Abstandsmessungen zum Führungsdraht und links und rechts davon an dem ersten und zweiten Ende der Anpassschicht je eine runde Referenz-Piezoscheibe 13 für den Betrieb der Referenzstrecke. Für eine Entkopplung der Mess-Piezoscheiben 2 und der Referenz-Piezoscheiben 13 dienen die Nuten 15.

Fig.6 zeigt das Ultraschallwandler-Array wie in Fig 5 beschrieben, jedoch zusätzlich mit umlaufendem Rand, so dass sich eine Wanne 4 ausbildet.

Bezugszeichen

1 Gehäuse
2 Mess-Piezoscheiben
3 Anpassschicht
4 Wanne
5 Führungsfläche, Führungsdraht
6 Befestigungszapfen
7 Auswerteeinrichtung
8 Anschlusssockel
9 Bodenseite
10 Indikatoren
11 Reflektorbügel
12 Reflektorfläche
13 Referenz-Piezoscheiben
15 Nuten
M Ultraschallkeule
R Referenzmessstrecke

## Patentansprüche

1. Sensor zur Erfassung seiner relativen Lage zu einer Führungsfläche (5) mit einem Gehäuse (1), an dessen Bodenseite (9) sich ein ebenes, länglich ausgebildetes Ultraschallwandler-Array befindet, welches aus mehreren Mess-Ultraschallwandlern besteht, die mit ihren schallabstrahlenden Wandleroberflächen parallel zum Ultraschallwandler-Array ausgerichtet sind, und einer elektronischen Auswerteeinrichtung (7), die abhängig von Messsignalen der Mess-Ultraschallwandler Messwerte zur Lage der Führungsfläche (5) abgibt, **dadurch gekennzeichnet, dass**

    an den beiden äußeren Enden des Ultraschallwandler-Arrays zusätzlich je ein Referenz-Ultraschallwandler angebracht ist, die mit ihren schallabstrahlenden Wandleroberflächen gleichfalls parallel zum Ultraschallwandler-Array ausgerichtet sind, und beabstandet zur Bodenseite (9) und in Flucht zu den Referenz-Ultraschallwandlern je eine Reflektorfläche (12) angebracht ist, die jeweils um 45° zum jeweiligen Referenz-Ultraschallwandler geneigt sind und die zueinander zeigen, und sich somit eine Referenzmessstrecke (R) mit einer bekannten Länge zwischen den beiden Referenz-Ultraschallwandlern ausbildet.

2. Sensor nach Anspruch 1, **dadurch gekennzeichnet, dass**
    die beiden Reflektorflächen (12) durch je einen mit dem Gehäuse (1) verbunden Reflektorbügel (11) gebildet sind.

3. Sensor nach Anspruch 1, **dadurch gekennzeichnet, dass** die Führungsfläche (5) aus der Oberkante eines Führungsdrahtes gebildet ist.

4. Sensor nach Anspruch 1, **dadurch gekennzeichnet, dass** die Führungsfläche (5) aus der Oberfläche des Bodens, eines Randsteins oder einer Fahrbahnkante gebildet ist.

5. Sensor nach Anspruch 1, **dadurch gekennzeichnet, dass**
    die Referenz-Ultraschallwandler und die Mess-Ultraschallwandler des Ultraschallwandler-Arrays durch eine einzige ebene, länglich ausgebildete akustische Anpassschicht (3) verbunden sind, auf dessen Rückseite mehrere zueinander beabstandete Mess-Piezoscheiben (2) und an den beiden äußeren Enden dieser Anordnung zusätzlich je eine Referenz-Piezoscheibe (13) aufgebracht ist und die Rückseite der Anpassschicht (3) mit den Piezoscheiben von einem Schaumstoff umschlossen ist und mit seiner gegenüberliegenden vorderen glatten Seite bündig mit der Bodenseite (9) des Sensors abschließt und das Ultraschallwandler-Array somit als eine monolithische Einheit ausgebildet ist.

6. Sensor nach Anspruch 5, **dadurch gekennzeichnet, dass**
    fünf runde Mess-Piezoscheiben (2) beabstandet in einer Reihe auf der Anapssschicht (3) platziert sind.

**7.** Sensor nach Anspruch 5, **dadurch gekennzeichnet, dass** vier rechteckige Mess-Piezoscheiben (2) beabstandet in einer Reihe auf der Anpassschicht (3) platziert sind.

**8.** Sensor nach Anspruch 5, **dadurch gekennzeichnet, dass** sich auf der Rückseite in den Zwischenräumen zwischen den Mess-Piezoscheiben (2) Nuten (15) in der Anpassschicht (3) zur akustischen Entkopplung befinden.

**9.** Sensor nach Anspruch 5, **dadurch gekennzeichnet, dass** der Schaumstoff aus Polyurethan- oder Silikonschaum besteht.

**10.** Sensor nach Anspruch 5, **dadurch gekennzeichnet, dass** die Anpassschicht (3) zusätzlich einen umlaufenden Rand aufweist, der mit der Anpassschicht (3) eine Wanne (4) bildet und die Innenseite dieser Wanne (4) metallisiert ist.

**11.** Sensor nach Anspruch 5, **dadurch gekennzeichnet, dass** die Messwerte als Analogsignal bereitgestellt werden.

**12.** Sensor nach Anspruch 5, **dadurch gekennzeichnet, dass** die Messwerte als digitale Information an einer CAN-Bus-Schnittstelle bereitgestellt werden.

**13.** Sensor nach Anspruch 5, **dadurch gekennzeichnet, dass** an dem Gehäuse (1) Indikatoren (10) angebracht sind, die anzeigen, ob sich die Führungsfläche (5) in einem vorgegebenen horizontalen und/oder vertikalen Lagebereich des Sensors befindet.

**14.** Verfahren zur Ermittlung von Umweltfaktoren an der Bodenseite (9) eines Sensors nach Anspruch 1 oder 2 mittels seiner Referenzmessstrecke (R), **dadurch gekennzeichnet, dass** einer der Referenz-Ultraschallwandler einen kurzen Schallimpuls mit einer ersten Ultraschallfrequenz aussendet, der über die beiden Reflektorflächen (12) umgelenkt und über die Referenzmessstrecke (R) zu dem anderen Referenz-Ultraschallwandler gelangt und dort empfangen wird, und die Auswerteeinrichtung (7) eine erste Zeit zwischen dem Aussenden des Schallimpulses und dem Empfang misst, anschließend die gleiche Messung in entgegengesetzter Richtung wiederholt wird und die Auswerteeinrichtung (7) dabei eine zweite Zeit misst und aus der ersten und zweiten gemessenen Zeit den arithmetischen Mittelwert gebildet wird und dieser Mittelwert als Maß für die aktuellen Werte der Umweltfaktoren an der Bodenseite (9) des Sensors dient.

**15.** Verfahren zur Erfassung einer relativen Lage eines Sensors nach einem der Ansprüche 1 bis 13 zu einer Führungsfläche (5), bei dem von den Mess-Ultraschallwandlern Sendeimpulse mit einer zweiten Ultraschallfrequenz abgegeben werden und deren Reflexionen an der Führungsfläche (5) als Echo wieder empfangen werden und die Laufzeiten der Echos gemessen und daraus in der Auswerteeinrichtung (7) über trigonometrische Berechnungen Lageinformationen gebildet und als Messwerte ausgegeben werden, **dadurch gekennzeichnet, dass** bei der Berechnung der Lageinformationen die nach dem Verfahren gemäß Anspruch 14 berechneten aktuellen Werte der Umweltfaktoren in der Referenzmessstecke (R) zur Kompensation von Umwelteinflüssen herangezogen werden.

**16.** Verfahren nach den Ansprüchen 14 und 15, **dadurch gekennzeichnet, dass** die erste Ultraschallfrequenz in der Referenzmessstrecke höher ist als die zweite Ultraschallfrequenz zur Lagestimmung der Führungsfläche.

**17.** Verfahren nach Anspruch 15 **dadurch gekennzeichnet, dass** in einem ersten Betriebsmodus nur eine Information über die vertikale Lage der Führungsfläche (5) ausgegeben wird und in einem zweiten Betriebsmodus eine horizontale und eine vertikale Information zur Lage der Führungsfläche (5) ausgegeben wird.

**18.** Verfahren nach Anspruch 15, **dadurch gekennzeichnet, dass** die berechnete Lageinformation auf den Indikatoren (10) am Gehäuse (1) dargestellt wird.

## Claims

**1.** Sensor for detecting the position thereof relative to a guide face (5), comprising a housing (1), on the base face (9) of which a planar, elongately formed ultrasound converter array is located which consists of a plurality of measurement ultrasound converters which are oriented with the sound-emitting converter surfaces thereof parallel to the ultrasound converter array, and an electronic evaluation device (7), which emits measurement values for the position of the guide face (5) as a function of measurement signals of the measurement ultrasound converter, **characterised in that** a reference ultrasound converter is additionally attached to each of the two outer ends of the ultrasound converter array, said reference ultrasound converters being orientated with the sound-emitting converter surfaces thereof likewise parallel to the ultrasound converter array, and in each case a reflector face (12) is attached spaced apart from the base face (9) and in line with the reference ultrasound converters, said reflector faces each being inclined at 45° to the associated reference ultrasound converter and facing towards one another and thus forming a reference measurement path (R) of a known length between the two reference ultrasound converters.

2. Sensor according to claim 1, **characterised in that** the two reflector faces (12) are each formed by a reflector bracket (11) connected to the housing (1).

3. Sensor according to claim 1, **characterised in that** the guide face (5) is formed on the upper edge of a guide wire.

4. Sensor according to claim 1, **characterised in that** the guide face (5) is formed from the surface of the base, of a kerb or of a roadway edge.

5. Sensor according to claim 1, **characterised in that** the reference ultrasound converters and the measurement ultrasound converters of the ultrasound converter array are connected by a single planar, elongately formed acoustic adaptation layer (3), to the rear face of which a plurality of measurement piezo discs (2) spaced apart from one another are attached, and a reference piezo disc (13) is additionally attached to each of the two outer ends of this arrangement, and the rear face of the adaptation layer (3) is enclosed together with the piezo discs by a foam and ends with the opposing front smooth face thereof flush with the base face (9) of the sensor, and the ultrasound converter array is thus formed as a monolithic unit.

6. Sensor according to claim 5, **characterised in that** five round measurement piezo discs (2) are placed spaced apart in a row on the adaptation layer (3).

7. Sensor according to claim 5, **characterised in that** four rectangular measurement piezo discs (2) are placed spaced apart in a row on the adaptation layer (3).

8. Sensor according to claim 5, **characterised in that** there are grooves (15) in the adaptation layer (3), on the rear face in the gaps between the measurement piezo discs (2), for acoustic decoupling.

9. Sensor according to claim 5, **characterised in that** the foam consists of polyurethane foam or silicone foam.

10. Sensor according to claim 5, **characterised in that** the adaptation layer (3) additionally has a peripheral edge which together with the adaptation layer (3) forms a trough (4), and the inner face of this trough (4) is metallised.

11. Sensor according to claim 5, **characterised in that** the measurement values are provided as an analogue signal.

12. Sensor according to claim 5, **characterised in that** the measurement values are provided as digital information at a CAN bus interface.

13. Sensor according to claim 5, **characterised in that** indicators (10), which display whether the guide face (5) is located in a predetermined horizontal and/or vertical position range of the sensor, are attached to the housing (1).

14. Method for determining environmental factors at the base face (9) of a sensor according to either claim 1 or claim 2 by means of the reference measurement path (R) thereof,
**characterised in that**
one of the reference ultrasound converters transmits a short sound pulse of a first ultrasound frequency, which is deflected via the two reflector faces (12) and via the other reference measurement path (R) reaches the other reference ultrasound converter and is received there, and the evaluation device (7) measures a first time between the transmission of the sound pulse and the reception, subsequently the same measurement is repeated in the opposite direction, and the evaluation device (7) thus measures a second time, and the arithmetic mean of the first and second measured times is taken, and this mean is used as a measure of the current value of the environmental factors at the base face (9) of the sensor.

15. Method for detecting a position of a sensor according to any of claims 1 to 13 relative to a guide face (5), in which transmission pulses of a second ultrasound frequency are emitted by the measurement ultrasound converters and the reflections thereof on the guide face (5) are received again as an echo and the transit times of the echoes are measured and position information is formed thereof by trigonometric calculations in the evaluation means (7) and outputted as measurement values, **characterised in that** in the calculation of the position information the current values of the environmental factors in the reference measurement path (R), as calculated by the method according to claim 14, are used to compensate environmental influences.

16. Method according to claims 14 and 15, **characterised in that** the first ultrasound frequency in the reference measurement path is higher than the second ultrasound frequency for determining the position of the guide face.

17. Method according to claim 15, **characterised in that** in a first operating mode only a piece of information concerning the vertical position of the guide face (5) is outputted, and in a second operating mode a horizontal and a vertical piece of information on the position of the guide face (5) are outputted.

18. Method according to claim 15, **characterised in that** the calculated position information is displayed on the indicators (10) on the housing (1).

## Revendications

1. Capteur destiné à saisir sa position relativement à une surface de guidage (5), doté d'un boîtier (1) sur le fond (9) duquel se trouve un ensemble plat et conçu en longueur de transducteurs ultrasonores, lequel capteur est constitué de plusieurs transducteurs ultrasonores de mesure, qui sont orientés avec leurs surfaces rayonnantes parallèlement à l'ensemble de transducteurs ultrasonores, et un moyen électronique de contrôle (7), fournissant des valeurs de mesure sur la position de la surface de guidage (5) en fonction des signaux de mesure des transducteurs ultrasonores de mesure, **caractérisé en ce qu'**aux deux extrémités extérieures de l'ensemble de transducteurs ultrasonores sont disposés en outre des transducteurs ultrasonores de référence, qui sont également orientés avec leurs surfaces rayonnantes parallèlement à l'ensemble de transducteurs ultrasonores, et des surfaces réflectrices (12) sont disposées à distance du fond (9) et en alignement par rapport aux transducteurs ultrasonores de référence, respectivement inclinées à 45° par rapport aux transducteurs ultrasonores de référence respectifs et se faisant face, et formant ainsi une ligne de mesure de référence (R) de longueur connue entre les deux transducteurs ultrasonores de référence.

2. Capteur selon la revendication 1, **caractérisé en ce que** les deux surfaces réflectrices (12) sont chacune formées par une anse réflectrice (11) reliée au boîtier (1).

3. Capteur selon la revendication 1, **caractérisé en ce que** la surface de guidage (5) est formée par le bord supérieur d'un fil de guidage.

4. Capteur selon la revendication 1, **caractérisé en ce que** la surface de guidage (5) est formée par la surface du sol, la surface d'une bordure de trottoir ou la surface d'un bord de chaussée.

5. Capteur selon la revendication 1, **caractérisé en ce que** les transducteurs ultrasonores de référence et les transducteurs ultrasonores de mesure de l'ensemble de transducteurs ultrasonores sont reliés par une unique couche d'adaptation acoustique (3) plate et conçue en longueur, sur la face arrière de laquelle sont agencés plusieurs disques piézoélectriques de mesure (2) écartés l'un de l'autre et, à chacune des deux extrémités extérieures de cet arrangement, est agencé en outre un disque piézoélectrique de référence (13) et la face arrière de la couche d'adaptation (3) est enserrée avec les disques piézoélectriques par une mousse et sa face opposée avant lisse rejoint en affleurement le fond (9) du capteur et l'ensemble de transducteurs ultrasonores est ainsi réalisé comme une unité monolithique.

6. Capteur selon la revendication 5, **caractérisé en ce que** cinq disques piézoélectriques de mesure (2) ronds sont placés écartés l'un de l'autre en alignement sur la couche d'adaptation (3).

7. Capteur selon la revendication 5, **caractérisé en ce que** quatre disques piézoélectriques de mesure (2) rectangulaires sont placés écartés l'un de l'autre en alignement sur la couche d'adaptation (3).

8. Capteur selon la revendication 5, **caractérisé en ce que** des rainures (15) dans la couche d'adaptation (3) se trouvent sur la face arrière dans les espaces intermédiaires entre les disques piézoélectriques de mesure (2) pour le découplage acoustique.

9. Capteur selon la revendication 5, **caractérisé en ce que** la mousse plastique est faite de polyuréthane ou de silicone.

10. Capteur selon la revendication 5, **caractérisé en ce que** la couche d'adaptation (3) comporte en outre un bord périphérique, lequel forme avec la couche d'adaptation (3) une cuvette (4) et la face interne de cette cuvette (4) est métallisée.

11. Capteur selon la revendication 5, **caractérisé en ce que** les valeurs de mesures sont fournies comme signal analogique.

12. Capteur selon la revendication 5, **caractérisé en ce que** les valeurs de mesures sont fournies comme signal numérique à une interface de bus CAN.

13. Capteur selon la revendication 5, **caractérisé en ce que** des indicateurs (10) sont agencés sur le boîtier (1), lesquels affichent si la surface de guidage (5) se trouve dans une plage prédéfinie de positions du capteur horizontales et/ou verticales.

14. Procédé de détermination de facteurs d'environnement sur un fond (9) d'un capteur selon la revendication 1 ou 2 au moyen de sa ligne de mesure de référence (R), **caractérisé en ce qu'**un des transducteurs ultrasonores de référence émet avec une première fréquence ultrasonore une impulsion sonore courte, laquelle est déviée par les deux surfaces réflectrices (12) et atteint l'autre transducteur ultrasonore de référence par la ligne de mesure de référence (R) et y est reçue, et le moyen de contrôle (7) mesure une première durée entre l'émission de l'impulsion sonore et la réception, ensuite la même mesure est effectuée dans la direction opposée et le moyen de contrôle (7) mesure ainsi une deuxième durée et la moyenne arithmétique de la première et de la deuxième durée mesurées est calculée et cette moyenne sert de mesure des valeurs actuelles des facteurs d'environnement sur le fond (9) du capteur.

15. Procédé de saisie d'une position relative à une surface de guidage (5) d'un capteur selon l'une des revendications 1 à 13, lors duquel des impulsions émises par les transducteurs ultrasonores de mesure sont distribuées avec une deuxième fréquence ultrasonore et dont les réflexions sur la surface de guidage (5) sont reçues comme échos et les temps de parcours des échos sont mesurés et, à partir de ceux-ci, des informations de positions sont formées dans le moyen de contrôle (7) par calcul trigonométrique et sont fournies comme valeurs de mesure, **caractérisé en ce que** lors du calcul des informations de position, les valeurs actuelles des facteurs d'environnement calculées selon le procédé conforme à la revendication 14 sont utilisées dans la ligne de mesure de référence (R) pour composer les influences de l'environnement.

16. Procédé selon les revendications 14 et 15, **caractérisé en ce que** la première fréquence ultrasonore dans la ligne de mesure de référence est plus élevée que la deuxième fréquence ultrasonore pour l'orientation de la surface de guidage.

17. Procédé selon la revendication 15, **caractérisé en ce que** dans un premier mode de fonctionnement seule une information sur la position verticale de la surface de guidage (5) est fournie et dans un deuxième mode de fonctionnement une information horizontale et une information verticale sont fournies sur la position de la surface de guidage (5).

18. Procédé selon la revendication 15, **caractérisé en ce que** l'information de position calculée est affichée sur les indicateurs (10) sur le boîtier (1).

Fig. 1

Fig. 4

**Fig. 2**

**Fig. 3**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 1776124 A
- US 2006133209 A1
- DE 3816198 C1
- DE 4206990 A1
- DE 4204481 A1
- US 4470299 A